# FASCICULE DE BREVET EUROPEEN

(11) **EP 1 690 389 B1**
(45) Date de publication et mention de la délivrance du brevet: **06.01.2010**
(21) Numéro de dépôt: 04805566.9
(22) Date de dépôt: 26.11.2004
(51) Int. Cl.: H04L 12/64, H04L 12/28

(54) **PROCEDE DE SURVEILLANCE DE L'ETAT D'UN APPAREIL AU SEIN D'UN RESEAU ET APPAREIL PERMETTANT D'EFFECTUER UNE TELLE SURVEILLANCE**
VERFAHREN ZUM ÜBERWACHEN DES ZUSTANDS EINER EINRICHTUNG IN EINEM NETZWERK UND EINRICHTUNG ZUM AUSFÜHREN DES ÜBERWACHENS
METHOD FOR MONITORING THE STATE OF A DEVICE IN A NETWORK AND DEVICE FOR CARRYING OUT SAID MONITORING

(30) Priorité: 28.11.2003 FR 0350931
(43) Date de publication de la demande: 16.08.2006
(73) Titulaire: Thomson Licensing, 92100 Boulogne-Billancourt (FR)
(72) Inventeur: BURELLER, Olivier, F-35340 Liffre (FR)
(74) Mandataire: Le Dantec, Claude
(86) Numéro de dépôt international: PCT/FR2004/003038
(87) Numéro de publication internationale: WO 2005/055537

(56) Documents cités:
- EP-A- 1 185 034
- DE-A- 19 835 668
- US-B1- 6 430 629

## Description

L'invention concerne un procédé de surveillance de l'état d'un appareil connecté à un réseau domestique et un appareil de détection pour la surveillance via un réseau d'un autre appareil.

Un réseau de communication numérique comprend des appareils reliés entre eux par un bus de communication, par exemple le bus IEEE 1394, utilisant des fils ou des ondes. Le réseau de communication comporte, par exemple, les appareils suivants : un terminal permettant à des utilisateurs de visualiser des émissions audiovisuelles, d'introduire des paramètres de contrôle du réseau et de connaître l'état du réseau, un récepteur de télévision numérique (un décodeur par exemple) capable de recevoir des émissions audiovisuelles et des informations de service provenant d'un réseau de diffusion, un dispositif de mémorisation des émissions audiovisuelles, un modem, etc. La liste des appareils n'est pas exhaustive, de même plusieurs appareils peuvent être en plusieurs exemplaires au sein du réseau de communication, par exemple une caméra dans chaque chambre d'enfant.

Le réseau 1394 permet de faire communiquer des appareils selon trois modes différents : le mode synchrone où les paquets de données sont émis régulièrement à la fin de périodes de temps déterminé, le mode asynchrone où chaque message est isolé des autres et peut être émis à tout moment, le mode isochrone où les paquets de données sont émis régulièrement dans une fourchette de temps déterminée. Ces différents modes de communication sont utilisés pour le transfert de données spécifiques. On transmet généralement des commandes en mode asynchrone, des données diffusées en mode synchrone, et des données de flux internes au réseau en mode isochrone. Dans ce dernier cas, on trouve des données de surveillance émises par une caméra disposée dans une chambre d'enfant, un téléviseur affichant lesdites données. A la différence des données audiovisuelles reçues d'un réseau de diffusion et soumises à des synchronisations très précises et régulières, une telle surveillance n'a besoin que de recevoir une image de temps en temps, à des moments qui peuvent varier.

La surveillance du bon fonctionnement d'appareil connecté en réseau est généralement effectuée par un dispositif inhérent à l'appareil. On trouve par exemple des dispositifs « chien de garde » ou « Watchdog » en anglais, qui déclenche un message d'erreur lorsque à la fin d'un temporisateur, l'unité centrale sous surveillance n'a pas effectué une certaine action. Ce dispositif doit bien évidemment être plus fiable que l'unité centrale qu'il est chargé de surveiller. Chaque appareil sous surveillance doit posséder son propre dispositif, la présente invention permet entre autre avantage, de limiter le nombre de dispositifs de surveillance tout en pouvant surveiller un nombre important d'appareils.

Le document US 6 430 629 B1 - SMYERS, publié le 6 Août 2002 décrit un réseau 1394, et la possibilité de surveiller la température de pièces grâce à des modules communiquant à l'aide de ce réseau. L'invention concerne plus précisément le "monitoring » de l'état d'un appareil d'un réseau. Un écran indique l'état d'appareil tels qu'un VCR ou un STB, et la température de la pièce. La revendication 1 indique que le moniteur du réseau reçoit périodiquement des informations indiquant l'état des appareils.

Le document EP 1 185 034 - SONY enseigne la détection d'erreur dans une boucle d'émission d'un réseau, par exemple 1394. Un appareil du réseau est configuré pour détecter des erreurs de connexion sur un canal isochrone, la détection d'erreur s'effectue en autre par scrutation des signaux « IEEE 1394 signal S1 ». D'autres détections peuvent s'effectuer en analysant la régularité d'émission des paquets de données ce qui définit un niveau de priorité dans l'erreur et une action spécifique, par exemple l'affichage sur un écran de la détection d'erreur. Ce document enseigne un appareil exerçant une surveillance sur toutes les communications du réseau et non spécifiquement sur un appareil désirant être sous surveillance.

La présente invention consiste en un procédé de surveillance de l'état d'un appareil au sein d'un réseau de communication comportant au moins deux appareils, le réseau comportant des canaux de communication isochrones transmettant des paquets de données synchronisés par un signal émis par le réseau émis dans des intervalles de temps réguliers ; **caractérisé en ce qu**'il comporte les étapes suivantes :
au niveau d'un premier appareil désirant être sous surveillance :
   - émission par l'appareil sous surveillance de paquets de données sur un canal isochrone spécifié en réponse au signal émis régulièrement par le réseau ;
au niveau d'un second appareil:
   - surveillance des émissions de paquets de données émis sur le canal isochrone ;
   - exécution d'une tâche spécifiée, consécutivement à l'absence de paquets de données sur le canal isochrone entre au moins deux émissions de signaux de synchronisation.

De cette façon, la surveillance de l'état d'un appareil utilise pleinement les ressources du réseau en exploitant les signaux de synchronisation des émissions isochrones et en s'en servant pour détecter la fin prématurée des émissions de données sur de tels canaux.

Selon un premier perfectionnement, le procédé comporte une étape d'émission d'une requête de surveillance contenant un identifiant du canal isochrone transmettant les paquets et un descriptif de tâche. De cette manière, l'appareil à surveiller informe l'appareil chargé de la surveillance de ce qu'il doit faire en cas de disfonctionnement.

Selon un autre perfectionnement, la requête de surveillance spécifie un nombre prédéterminé de signaux de synchronisation. De cette façon, l'appareil de surveillance attend la détection du nombre prédéterminé de signaux pour déclencher l'exécution de la tâche spécifiée.

Selon un autre perfectionnement le procédé comporte une étape d'émission par le second appareil d'un signal de prise en charge suite à la réception de la requête de surveillance. Ainsi, l'appareil qui demande à être sous surveillance sait que cette surveillance est assurée par un appareil du réseau.

Selon un autre perfectionnement, la tâche spécifiée comporte l'affichage d'un message d'alerte comprenant un identificateur du premier appareil. Ainsi les utilisateurs du réseau peuvent être avertis d'un disfonctionnement.

Selon un autre perfectionnement, la tâche spécifiée comporte une étape d'analyse de la raison de l'arrêt des émissions de paquets de données, et une étape d'exécution d'actions pour reprendre l'émission des paquets de données. De cette façon, les appareils du réseau peuvent éliminer automatiquement les causes de certains disfonctionnement.

L'invention a aussi pour objet un appareil de réseau chargé de surveiller l'état d'au moins un autre appareil du réseau, comprenant un moyen de communication avec un réseau captant des signaux de synchronisation permettant l'émission de données isochrones et des paquets de données isochrones émis sur un canal isochrone spécifié ; **caractérisé en ce qu'**il comprend en outre un moyen d'exécution d'une tâche spécifiée consécutivement à l'absence de paquets de données sur le canal isochrone entre au moins deux émissions de signaux de synchronisation, l'absence de paquets étant révélateur de l'état de l'appareil sous surveillance.

D'autres caractéristiques et avantages de la présente invention ressortiront de la description des exemples de réalisation qui vont suivre, pris à titre d'exemples non limitatifs, en référence aux figures annexées dans lesquelles :
La figure 1 représente un schéma par blocs d'un réseau local connu;
La figure 2 représente le schéma par blocs d'un réseau selon un exemple de réalisation de l'invention ;
La figure 3 représente l'envoi d'une requête de surveillance d'un premier appareil vers une Unité de Contrôle des Communications Isochrones ;
La figure 4 représente le traitement d'une requête de surveillance par une Unité de Contrôle des Communications Isochrones ;
La figure 5 représente un chronogramme montrant le fonctionnement d'une Unité de Contrôle des Communications Isochrones contrôlant deux canaux isochrones ;
La figure 6 représente le schéma d'une Unité de Contrôle des Communications Isochrones selon un exemple de réalisation de l'invention ;
La figure 7 représente un chronogramme montrant les principales étapes du procédé selon un exemple de réalisation de l'invention.

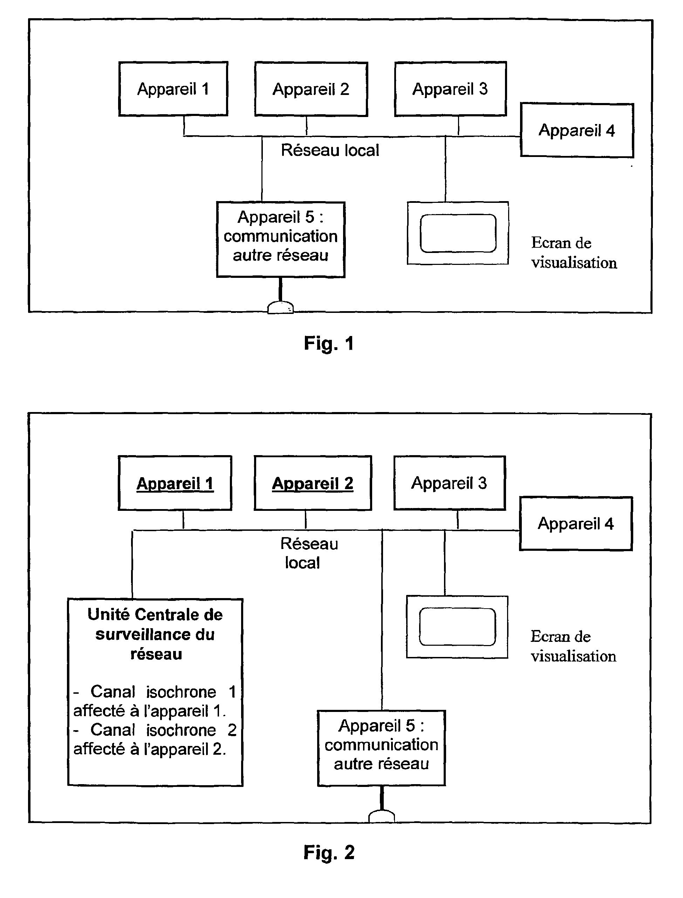

A l'aide de la figure 1, nous allons tout d'abord décrire un réseau local de communication numérique selon l'état actuel de la technique. Ce réseau comprend par exemple les appareils suivants :
- Appareil 1 : une caméra ;
- Appareil 2 : un ordinateur équipé d'un lecteur de disque DVD, d'une interface avec le réseau téléphonique (typiquement un modem) et d'un décodeur intégré;
- Appareil 3 : un décodeur STB doté d'un syntoniseur et d'un démultiplexeur DEMUX permettant de recevoir des émissions d'un réseau de diffusion et d'une mémoire (typiquement un disque dur) permettant de stocker les programmes et des données reçues du réseau de diffusion ;
- Appareil 4 : un magnétoscope numérique ;

D'autres appareils non représentés sont possibles dans le cadre de l'invention : un écran de visualisation, un magnétoscope analogique, des capteurs de températures pour la régulation du chauffage et la détection incendie, des détecteurs de mouvement pour détecter la présence d'individus en vue d'alarme. Tous ces appareils sont reliés entre eux par un bus numérique utilisant le standard IEEE 1394. Selon ce standard, les appareils communiquent entre eux de façon asynchrone ou isochrone. Une communication isochrone permet de transmettre un flux ininterrompu de données entre par exemple, une caméra et un écran visualisant les signaux vidéo de la caméra, un capteur de température transmettant des informations à la centrale de chauffage. Un canal isochrone possède la particularité de transmettre régulièrement des données d'un émetteur vers un récepteur dans une fourchette de temps définie par une bande passante déterminée. Le noeud du réseau appelé le Maître horloge (« Cycle Master » en Anglais) a pour but de garantir un cadencement régulier des paquets isochrones émis sur les canaux. Pour cela, le noeud Maître émet à tous les autres noeuds du réseau un signal de départ de cycle (ou « Cycle Start » selon la terminologie anglo-saxonne) toutes les 125 millisecondes. Ce signal sert de synchronisation pour émettre les paquets de données. Le réseau comprend également un appareil disposant d'une ressource logicielle appelée Manageur de Ressource Isochrone (IRM selon la terminologie anglaise : « Isochronous Resource Manager »). Le module IRM gère une mémoire où les identificateurs des différents canaux isochrones actifs ainsi que les bandes passantes sont enregistrés. Pour cela, l'IRM dispose de registres d'allocation de bande passante et d'allocation de canaux. L'IRM permet la gestion des canaux isochrones et de la bande passante disponibles sur le réseau. Le contrôle des canaux isochrones est de façon privilégiée dévolu au Maître horloge.

Selon un exemple préféré de réalisation de l'invention, le réseau comprend également une Unité de Contrôle des Canaux Isochrones (UCCI en abrégé et pour la suite du document). L'UCCI dispose de la fonction chien de garde du réseau (ou « Network Watchdog » en anglais) qui assure la surveillance des différents canaux isochrones activés dans le réseau local. Une UCCI est l'un quelconque des appareils connectés au réseau : le noeud Maître horloge, l'appareil possédant l'IRM, ou un autre noeud du réseau) celui possédant et équipé d'un module de surveillance selon un exemple préféré de réalisation de l'invention. Selon une variante, une UCCI est un appareil spécifique chargé de la surveillance des canaux isochrones, il s'implémente dans le réseau comme le montre la figure 2.

Nous allons maintenant détailler le déroulement de la surveillance par une UCCI. Un appareil du réseau doit exécuter une tâche importante, de ce fait son exécution est placée sous surveillance d'une UCCI. Une tâche est de façon privilégiée un programme exécuté par une Unité Centrale, cela peut être aussi une logique séquentielle enfouie dans un circuit spécialisé, un ASIC par exemple. Dans le déroulement normal de la tâche à surveiller, on aura pris soin d'implémenter l'émission de données spécifique sur un canal isochrone déterminé. L'important n'est pas dans le contenu des données mais dans la périodicité des émissions. On pourra donc envoyer avantageusement des paquets très courts. Le plus petit paquet isochrone émis sur un réseau IEEE1394 étant constitué d'un en-tête isochrone et d'un quartet. Ces données sont contenues dans 528 unités d'allocation, ce qui représente une durée de 10 microsecondes Dans l'étape d'initialisation de la tâche à surveiller, l'appareil va programmer l'UCCI pour surveiller son fonctionnement, puis l'UCCI va contrôler les émissions sur le canal isochrone.

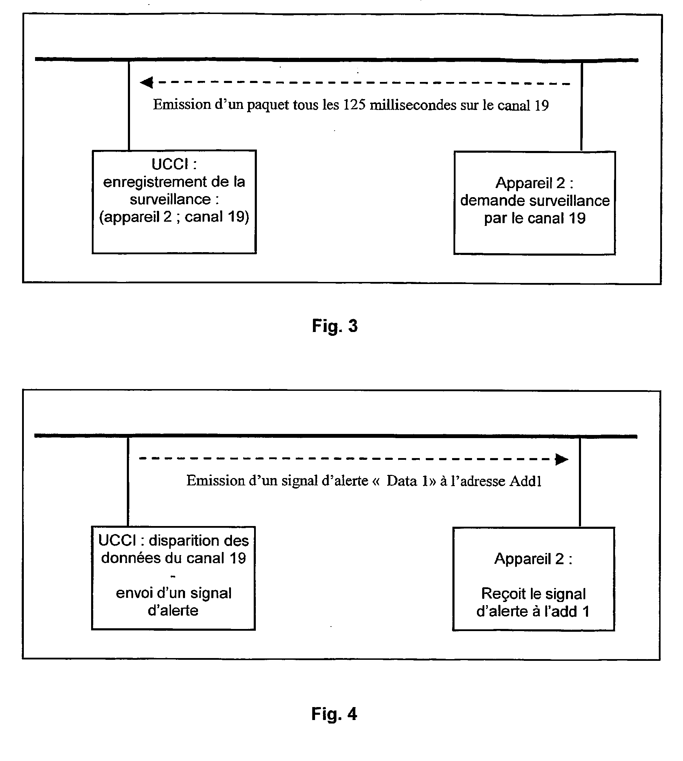

De façon illustrée par la figure 3, un appareil 2 envoie une requête de surveillance comportant son identificateur, l'identificateur d'un canal isochrone, le canal 19 par exemple, témoignant du bon fonctionnement de l'appareil, et un descriptif de la tâche à effectuer si les données émises sur ce canal disparaissent. L'UCCI reçoit la requête, enregistre les paramètres et commence la surveillance en scrutant les paquets de données émis sur le canal spécifié. Si le réseau comporte plusieurs UCCI, la première UCCI disponible émet sur le réseau un message de prise en compte de la surveillance avec les caractéristiques, enregistre dans sa mémoire les paramètres et commence aussitôt la surveillance. Les autres UCCI qui captent ce message de prise en charge, ne s'occupent pas de cette surveillance. Les données doivent être émises toutes les 125 microsecondes. Lors d'une interruption des émissions comme cela est illustré par la figure 4, l'UCCI recherche dans sa mémoire les paramètres de la tâche d'alerte qu'il doit effectuer. Par exemple, cette tâche est l'émission d'une donnée « data1 » à une adresse « add1 » du réseau. Cette adresse peut être l'appareil 2, en effet si cet appareil est doté d'un système multitâche, celle déclenchant l'émission des paquets isochrones peut être interrompue mais pas celle gérant la réception des données du réseau. De cette manière, l'appareil 2 peut être prévenu de l'extérieur d'un disfonctionnement interne. L'adresse peut aussi être un autre appareil du réseau, un terminal de visualisation par exemple, la donnée « data1 » est alors un message affichable. Le terminal de visualisation affichant alors le message d'alerte à l'intention d'un utilisateur.

Les requêtes de surveillance envoyées à une UCCI contiennent entre autres les informations suivantes :
- identificateur de l'appareil émettant la requête de surveillance,
- numéro du canal isochrone : 1, 2, ... (ou identificateur des paquets de données),
- durée maximum inter-paquets du canal isochrone, ou nombre maximum d'émission de signaux de départ de cycle avant exécution de la tâche d'alerte,
- descripteur de tâche d'alerte.

Le descripteur de la tâche d'alerte décrit les différentes actions de l'UCCI effectuées lors de la détection de la disparition d'un canal isochrone. Voici diverses actions susceptibles d'être dans une tâche d'alerte :
- émission d'un message d'avertissement : « Disparition du canal 1 » à destination de tous les écrans de l'habitation. Le message est envoyé de façon asynchrone à chaque dispositif d'affichage,
- émission d'un signal sonore par l'UCCI,
- déclenchement d'une succession programmée d'actions pour palier au disfonctionnement détecté par l'UCCI.

La tâche d'alerte est mémorisée et envoyée telle quel sur le réseau. Si l'appareil sous surveillance ne spécifie pas de tâche d'alerte, l'UCCI possède une tâche par défaut consistant à afficher sur un écran du réseau tous les paramètres disponibles pour informer un utilisateur du disfonctionnement. Le message affiché est par exemple « à 20h30, interruption des émissions sur le canal isochrone 2 provenant de l'appareil 1 ». L'utilisateur peut ainsi intervenir sur l'appareil 1 et remettre la tâche en bon état de marche.

Une variante consiste en ce que l'appareil sous surveillance définisse précisément l'action d'alerte et en informe l'UCCI. Par exemple, un utilisateur programme l'enregistrement d'une émission sur le canal numérique 21, ce canal étant fourni par un décodeur recevant les signaux d'un réseau de diffusion, la tâche d'enregistrement exécutée sur un appareil d'enregistrement est sous la surveillance d'une UCCI. Au moment de la réception de l'émission, l'appareil enregistreur programme le décodeur pour recevoir l'émission et enregistre les premiers paquets de données reçus à travers le réseau. Supposons que le récepteur cesse d'émettre, la tâche d'enregistrement est alors interrompue L'UCCI détecte à la fin de la temporisation une interruption de la tâche d'enregistrement, le descripteur spécifie qu'elle doit faire apparaître un message suivant sur l'écran du salon : « fin prématurée de l'enregistrement à 20h30 » où 20h30 étant une variable mise à jour par l'UCCI. Un perfectionnement consiste en ce que le descripteur reçu par l'UCCI possède plusieurs actions à mener en fonction de l'analyse des causes du disfonctionnement. Selon le précédent exemple et ce perfectionnement, le descripteur reçu par l'UCCI prévoit d'analyser la présence de paquets de données audiovisuelles provenant du canal 21 au cours de chaque durée déterminée. Si aucun paquet n'est détecté, l'UCCI appelle un second décodeur et lui envoie une requête de réception du canal 21. Si la requête est acceptée, l'enregistrement se poursuit normalement à partir des données émises sur le réseau domestique par le second décodeur. Si par contre aucun décodeur n'est disponible, l'UCCI affiche sur un écran un message indiquant la fin prématurée de l'enregistrement à cause d'une indisponibilité d'un décodeur. De cette façon, l'UCCI peut pallier à certains disfonctionnements afin de maintenir un enregistrement au sein du réseau local en utilisant pleinement les ressources disponibles.

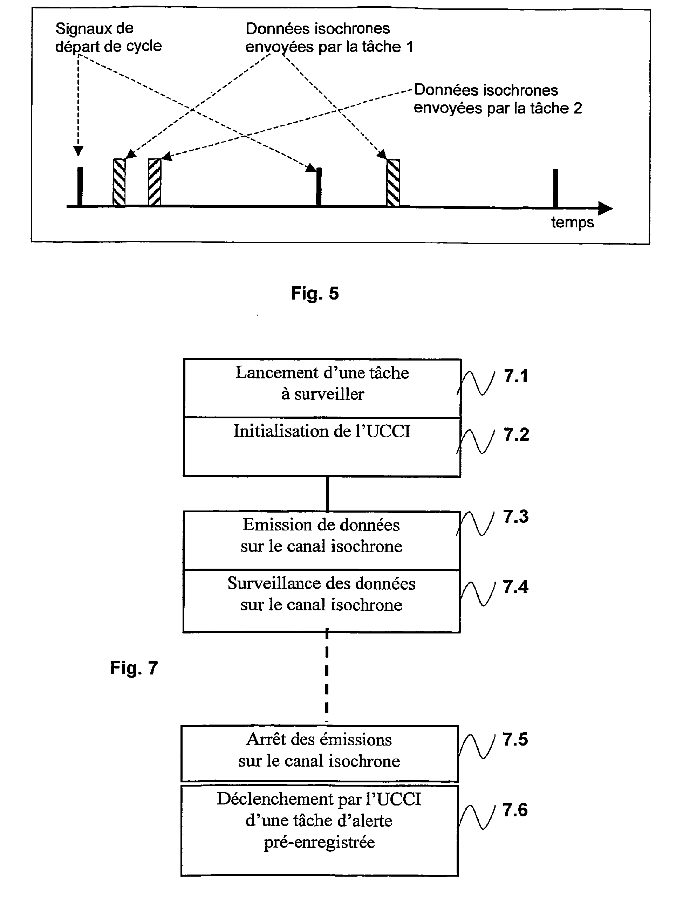

La figure 5 illustre la chronologie de deux tâches surveillées par une UCCI. Un appareil 1 exécutant une tâche 1 envoie un paquet de donnée sur le canal isochrone 1 et un appareil 2 exécutant une tâche 2 envoie un autre paquet de donnée sur le canal isochrone T2. L'UCCI surveillant les deux canaux, se synchronise sur les signaux départ de cycle émis par le Maître horloge. L'UCCI détecte la présence ou l'absence de paquets isochrones émis par chacun des canaux sous surveillance entre deux signaux départ de cycle. Un second paquet de données est émis sur le canal 1, donc la tâche exécutée par l'appareil 1 fonctionne correctement. Par contre, aucun paquet de données n'est émis sur le canal 2 avant l'émission d'un troisième signal départ de cycle. De ce fait, lorsque ce troisième signal départ de cycle est détecté, l'UCCI en déduit que le canal 2 n'est plus alimenté et que la tâche 2 exécutée par l'appareil 2 ne fonctionne plus correctement. Il lance la tâche d'alerte correspondant au disfonctionnement de la tâche 2 sur l'appareil 2. L'exemple décrit précédemment n'exclut pas de la présente invention le cas ou les deux tâches 1 et 2 soient exécutées au sein du même appareil.

Un perfectionnement consiste en ce que l'UCCI attende un nombre prédéterminé d'émissions de signaux de départ de cycle avant de déclencher l'action décrite dans le descripteur. Avantageusement, ce nombre prédéterminé est fixé par l'appareil qui désire être surveillé et est transmis dans le descripteur de tâche d'alerte. Ce perfectionnement permet d'économiser de la bande passante en permettant à l'appareil sous surveillance d'envoyer un paquet de données isochrones qu'au bout d'un nombre déterminé de signaux de départ de cycle. Pour cela, l'Unité Centrale contenue dans l'UCCI dispose d'un compteur et la donnée de comptage pour chaque canal isochrone est mise dans une nouvelle colonne du tableau enregistré en mémoire RAM,

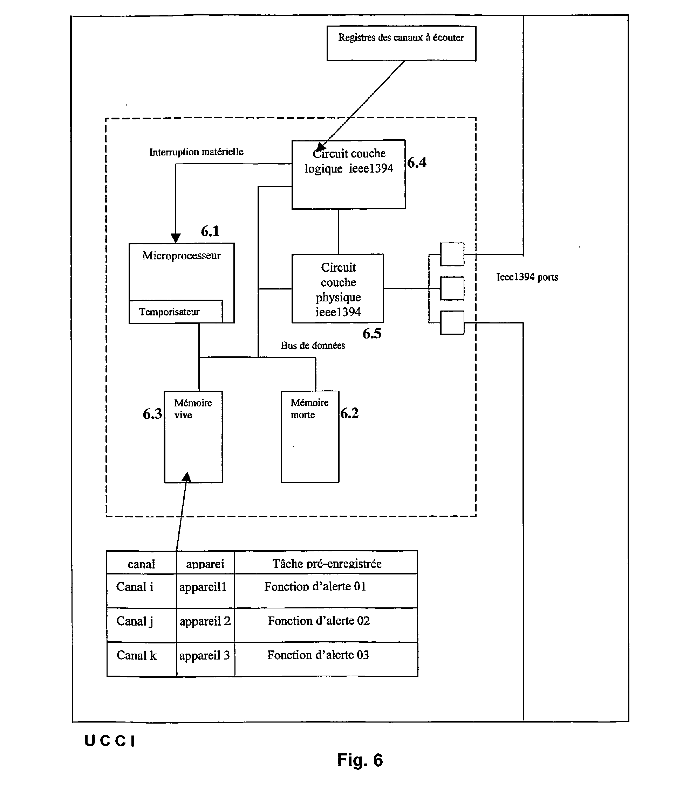

Un exemple de réalisation d'une UCCI est décrit à la figure 6. Qu'une UCCI soit physiquement un appareil standard doté d'un programme spécifique ou un appareil dédié à la surveillance, sa structure générale est la même. Une UCCI possède une Unité centrale 6.1, connectée à une mémoire ROM 6.2 dans laquelle se trouve inscrit au moins le programme de surveillance, une mémoire RAM 6.3 pour le stockage des données de programmation, un circuit d'interface logique 6.4 pour la communication avec le bus IEEE 1394 et un circuit d'interface matériel 6.5 avec le réseau 1394.

Le circuit d'interface 6.4 supporte la gestion de canaux isochrones. Ce circuit surveille constamment les données du réseau local et à l'aide de filtres numériques, extrait certains paquets selon leurs identificateurs. De cette façon, un récepteur peut recevoir en permanence des données émises sur un canal isochrone, sans avoir besoin d'aller les chercher. Le circuit d'interface 6.4 est par exemple un circuit TSB43AB22 fabriqué par la société Texas Instruments. Ce circuit génère une interruption matérielle sur réception d'un paquet de données qui agit sur le déroulement du programme exécuté par l'unité centrale 6.1. Ce circuit peut discriminer le canal grâce à deux registres de masque d'interruption qui spécifie les références dudit canal, ce qui permet de filtrer le ou les canaux isochrones à surveiller. Ce circuit est compatible avec le standard IEEE1394. La mémoire RAM 6.3 enregistre les données correspondant aux différentes surveillances des canaux isochrones utilisés. Ces données (identifiant du canal, identifiant de l'appareil, descriptif de la tâche d'alerte, compteur de signaux de départ de cycle, ...) sont disposées dans un tableau.

A l'aide de l'organigramme de la figure 7, nous allons maintenant détailler la succession des étapes selon un exemple de mise en oeuvre de l'invention. A l'étape 7.1 un appareil du réseau lance une tâche qui a besoin d'être surveillée. Il émet alors une requête vers une UCCI du réseau spécifiant le canal isochrone de surveillance et l'action à entreprendre si les émissions s'arrêtent (étape 7.2). A l'étape 7.3, l'appareil du réseau qui est sous surveillance commence à émettre régulièrement des paquets de données sur le canal isochrone. L'UCCI analyse chaque paquet du réseau et vérifie que chaque appareil sous surveillance émet bien au moins un paquet de données entre deux (ou un nombre déterminé de) signaux de départ de cycle (étape 7.4). Supposons qu'un appareil arrête ses émissions (étape 7.5). Lors de la réception du prochain départ de cycle, l'UCCI constate l'arrêt des émissions sur le canal isochrone spécifié et lance l'exécution de la tâche programmée (étape 7.6).

Une variante consiste à équiper l'UCCI d'un interpréteur. De cette façon, on peut programmer l'action d'alerte dans un langage qui est interprété par l'UCCI (par exemple : QUICK BASIC) et qui permet de définir précisément les actions à effectuer.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

## Revendications

1. Procédé de surveillance de l'état d'un premier appareil au sein d'un réseau de communication comportant au moins deux appareils, le réseau comportant des canaux de communication isochrones transmettant des paquets de données synchronisés par un signal émis dans des intervalles de temps réguliers par le réseau ; **caractérisé en ce qu'**il comporte les étapes suivantes :
au niveau du premier appareil désirant être sous surveillance :
- émission (7.3) par ledit premier appareil de paquets de données sur un canal isochrone en réponse au signal émis régulièrement par le réseau ;
au niveau d'un second appareil (UCCI) :
- réception (7.4) des émissions de paquets de données émis sur le canal isochrone ;
- exécution d'une tâche spécifiée (7.6), consécutivement à l'absence de paquets de données sur le canal isochrone entre au moins deux émissions de signaux de synchronisation.

2. Procédé de gestion selon la revendication 1 ; **caractérisé en ce qu'**il comporte au niveau du premier appareil d'une étape d'émission (7.1) d'une requête de surveillance contenant un identifiant du canal isochrone transmettant les paquets et un descriptif de tâche ; le second appareil exécutant la tâche ainsi spécifiée par le premier appareil.

3. Procédé de gestion selon la revendication 2 ; **caractérisé en ce que** la requête de surveillance spécifie un nombre prédéterminé de signaux de synchronisation ; le second appareil exécutant la tâche spécifiée lorsque aucun paquet de données n'a été détecté sur le canal isochrone suite à la détection du nombre de signaux de synchronisation spécifiée.

4. Procédé de gestion selon la revendication 2 ou 3; **caractérisé en ce qu'**il comporte une étape d'émission par le second appareil d'un signal de prise en charge suite à la réception de la requête de surveillance.

5. Procédé de gestion selon l'une quelconque des revendications précédentes ; **caractérisé en ce que** la tâche spécifiée comporte l'affichage d'un message d'alerte comprenant un identificateur du premier appareil.

6. Procédé de gestion selon l'une quelconque des revendications précédentes; **caractérisé en ce que** la tâche spécifiée comporte une étape d'analyse de la raison de l'arrêt des émissions de paquets de données, et une étape d'exécution d'actions pour reprendre l'émission des paquets de données.

7. Appareil de réseau (UCCI ; 1) chargé de surveiller l'état d'au moins un autre apparel du réseau, comprenant un moyen de réception (6.4 , 6.5) de signaux de synchronisation permettant l'émission de données isochrones et des paquets de données isochrones émis sur un canal isochrone spécifié dudit réseau; **caractérisé en ce qu'**il comprend en outre un moyen d'exécution (6.1 , 6.2) d'une tâche spécifiée consécutivement à l'absence de réception de paquets de données sur le canal isochrone entre au moins deux émissions de signaux de synchronisation, l'absence de paquets étant révélateur de l'état de l'appareil sous surveillance.

8. Appareil de réseau selon la revendication 7 **caractérisé en ce qu'**il comporte un moyen de réception (6.4 , 6.5) d'une requête de surveillance contenant l'identifiant du canal isochrone transmettant les paquets et un descriptif de la tâche spécifiée, ledit identifiant du canal et le descriptif de la tâche étant enregistrés dans une mémoire de l'appareil (6.3).

9. Appareil de réseau selon la revendication 8 **caractérisé en ce que** la requête de surveillance reçue spécifie un nombre prédéterminé de signaux de synchronisation et **en ce qu'**il comporte un compteur (6.4 , 6.5) de signaux de synchronisation, la tâche spécifiée étant exécutée lorsque aucun paquet de données n'a été détecté sur le canal isochrone suite à la détection du nombre de signaux de synchronisation spécifiée.

10. Appareil de réseau selon l'une quelconque des revendications 7 à 9 **caractérisé en ce qu'**il comporte un moyen d'affichage d'un message d'alerte activé par l'absence de paquets de données sur le canal isochrone entre au moins deux émissions de signaux de synchronisation.

11. Appareil de réseau selon l'une quelconque des revendications 8 à 10 sous la dépendance de la revendication 8 **caractérisé en ce qu'**il comporte un moyen d'émission d'un signal de prise en charge suite à la réception d'une requête de surveillance.

12. Appareil de réseau selon la revendication 11 **caractérisé en ce qu'**il comporte un moyen d'inhibition de la prise en charge d'une requête de surveillance activé lorsque le moyen de réception (6.4 , 6.5) avec le réseau capte un signal de prise en charge de ladite requête par un autre appareil du réseau.

## Claims

1. A method for monitoring the state of a device within a communication network comprising at least two devices, the network comprising isochronous communication channels transmitting data packets synchronized by a signal emitted by the network emitted in regular time intervals; **characterized in that** it comprises the following steps:
at the level of a first device desiring to be monitored:
- emission (7.3) by the device being monitored of data packets on a specified isochronous channel in response to the signal emitted regularly by the network;
at the level of a second device (ICCU):
- monitoring (7.4) of the emissions of data packets emitted on the isochronous channel;
- execution of a specified task (7.6), consequent upon the absence of data packets on the isochronous channel between at least two emissions of synchronization signals.

2. The method of management as claimed in claim 1; **characterized in that** it comprises at the level of the first device a step of emission (7.1) of a monitoring request containing an identifier of the isochronous channel transmitting the packets and a task descriptor; the second device executing the task thus specified by the first device.

3. The method of management as claimed in claim 2; **characterized in that** the monitoring request specifies a predetermined number of synchronization signals; the second device executing the specified task when no data packet has been detected on the isochronous channel following the detection of the specified number of synchronization signals.

4. The method of management as claimed in claim 2 or 3; **characterized in that** it comprises a step of emission by the second device of a handling signal following the reception of the monitoring request.

5. The method of management as claimed in any one of the preceding claims; **characterized in that** the specified task comprises the display of an alert message comprising an identifier of the first device.

6. The method of management as claimed in any one of the preceding claims; **characterized in that** the specified task comprises a step of analysis of the reason for the stoppage of the emissions of data packets, and a step of executing actions so as to resume the emission of the data packets.

7. A network device (ICCU; 1) charged with monitoring the state of at least one other device of the network, comprising a means of communication with a network (6.4, 6.5) sensing synchronization signals allowing the emission of isochronous data and isochronous data packets emitted on a specified isochronous channel; **characterized in that** it furthermore comprises a means (6.1, 6.2) for executing a specified task consequent upon the absence of data packets on the isochronous channel between at least two emissions of synchronization signals, the absence of packets being indicative of the state of the device being monitored.

8. The network device as claimed in claim 7 **characterized in that** it comprises a means (6.4, 6.5) for receiving a monitoring request containing the identifier of the isochronous channel transmitting the packets and a descriptor of the specified task, said identifier of the channel and the descriptor of the task being recorded in a memory of the device (6.3).

9. The network device as claimed in claim 8 **characterized in that** the monitoring request received specifies a predetermined number of synchronization signals and **in that** it comprises a counter (6.4, 6.5) of synchronization signals, the specified task being executed when no data packet has been detected on the isochronous channel following the detection of the specified number of synchronization signals.

10. The network device as claimed in any one of claims 7 to 9 **characterized in that** it comprises a means of display of an alert message activated by the absence of data packets on the isochronous channel between at least two emissions of synchronization signals.

11. The network device as claimed in any one of claims 8 to 10 under the dependence of claim 8 **characterized in that** it comprises a means for emitting a handling signal following the reception of a monitoring request.

12. The network device as claimed in claim 11 **characterized in that** it comprises a means for disabling the handling of a monitoring request, activated when the reception means (6.4, 6.5) with the network senses a signal for handling said request by another device of the network.

## Patentansprüche

1. Verfahren zum Überwachen des Zustands eines ersten Geräts innerhalb eines Kommunikationsnetzwerks mit mindestens zwei Geräten, wobei das Netzwerk isochrone Kommunikationskanäle aufweist, die Datenpakete übertragen, welche durch ein Signal synchronisiert werden, das in regelmäßigen Zeitabständen von dem Netzwerk ausgesendet werden, **dadurch gekennzeichnet, dass** es die folgenden Schritte umfasst:
an dem ersten Gerät, das überwacht werden möchte:
- Senden (7.3) von Datenpaketen durch das erste Gerät über einen isochronen Kanal auf das von dem Netzwerk regelmäßig ausgesendete Signal hin;
an einem zweiten Gerät (UCCI):
- Empfangen (7.4) der über den isochronen Kanal gesendeten Datenpaketsendungen;
- Ausführen einer spezifizierten Aufgabe (7.6) in Anschluss an das Ausbleiben von Datenpaketen auf dem isochronen Kanal zwischen mindestens zwei Sendungen von Synchronisationssignalen.

2. Überwachungsverfahren nach Anspruch 1, **dadurch gekennzeichnet, dass** es an dem ersten Gerät einen Schritt des Sendens (7.1) einer Überwachungsanfrage mit einer Kennung des isochronen Kanals umfasst, welcher die Pakete und eine Aufgabenbeschreibung überträgt, wobei das zweite Gerät die derart durch das erste Gerät spezifizierte Aufgabe ausführt.

3. Überwachungsverfahren nach Anspruch 2, **dadurch gekennzeichnet, dass** die Überwachungsanfrage eine vorbestimmte Anzahl von Synchronisationssignalen spezifiziert, wobei das zweite Gerät die spezifizierte Aufgabe dann ausführt, wenn auf dem isochronen Kanal infolge der Detektion der spezifizierten Anzahl von Synchronisationssignalen kein Datenpaket detektiert worden ist.

4. Überwachungsverfahren nach Anspruch 2 oder 3, **dadurch gekennzeichnet, dass** es einen Schritt des Sendens eines Übernahmesignals durch das zweite Gerät infolge des Empfangs der Überwachungsanfrage umfasst.

5. Überwachungsverfahren nach einem der vorhergehenden Ansprüche, **dadurch gekennzeichnet, dass** die spezifizierte Aufgabe das Anzeigen einer Warnmeldung mit einer Kennung des ersten Geräts umfasst.

6. Überwachungsverfahren nach einem der vorhergehenden Ansprüche, **dadurch gekennzeichnet, dass** die spezifizierte Aufgabe einen Schritt der Analyse des Grundes für die Unterbrechung der Sendungen von Datenpaketen und einen Schritt des Ausführen von Handlungen, um das Senden der Datenpakete wiederaufzunehmen, umfasst.

7. Netzwerkgerät (UCCI; 1) für die Überwachung des Zustands mindestens eines weiteren Netzwerkgeräts, mit einem Mittel für den Empfang (6.4, 6.5) von Synchronisationssignalen, die das Senden von isochronen Daten und von isochronen Datenpaketen ermöglichen, welche über einen spezifizierten isochronen Kanal des Netzwerks gesendet werden, **dadurch gekennzeichnet, dass** es ferner ein Mittel für die Ausführung (6.1, 6.2) einer spezifizierten Aufgabe in Anschluss an das Ausbleiben des Empfangs von Datenpaketen über den isochronen Kanal zwischen mindestens zwei Sendungen von Synchronisationssignalen aufweist, wobei das Ausbleiben von Paketen auf den Zustand des überwachten Geräts hinweist.

8. Netzwerkgerät nach Anspruch 7, **dadurch gekennzeichnet, dass** es ein Mittel für den Empfang (6.4, 6.5) einer Überwachungsabfrage mit der Kennung des isochronen, die Pakete und eine Beschreibung der spezifizierten Aufgabe übertragenden Kanals aufweist, wobei die Kanalkennung und die Aufgabenbeschreibung in einem Speicher des Geräts gespeichert sind (6.3).

9. Netzwerkgerät nach Anspruch 8, **dadurch gekennzeichnet, dass** die empfangene Überwachungsanfrage eine vorbestimmte Anzahl von Synchronisationssignalen spezifiziert und dass es einen Synchronisationssignalzähler (6.4, 6.5) aufweist, wobei die spezifizierte Aufgabe dann ausgeführt wird, wenn auf dem isochronen Kanal infolge der Detektion der spezifizierten Anzahl von Synchronisationssignalen kein Datenpaket detektiert worden ist.

10. Netzwerkgerät nach einem der Ansprüche 7 bis 9, **dadurch gekennzeichnet, dass** es ein Mittel für die Anzeige einer Warnmeldung aufweist, das durch das Ausbleiben von Datenpaketen auf dem isochronen Kanal zwischen mindestens zwei Sendungen von Synchronisationssignalen aktiviert wird.

11. Netzwerkgerät nach einem der Ansprüche 8 bis 10 in Abhängigkeit von Anspruch 8, **dadurch gekennzeichnet, dass** es ein Mittel zum Senden eines Übernahmesignals infolge des Empfangs einer Überwachungsanfrage aufweist.

12. Netzwerkgerät nach Anspruch 11, **dadurch gekennzeichnet, dass** es ein Mittel zum Sperren der Übernahme einer Überwachungsanfrage aufweist, das aktiviert wird, wenn das Mittel (6.4, 6.5) für den Empfang über das Netzwerk ein Signal betreffend die Übernahme der Anfrage durch ein anderes Gerät des Netzwerks erfasst.
